# EUROPÄISCHE PATENTANMELDUNG

(11) **EP 3 336 430 A1**
(43) Veröffentlichungstag der Anmeldung: **20.06.2018**
(21) Anmeldenummer: 17020157.8
(22) Anmeldetag: 20.04.2017
(51) Int. Cl.: F23L 15/04, F23L 7/00, F23D 14/66, C01B 3/34, C03B 5/237, F23C 9/00

(54) **VERFAHREN ZUR WÄRMERÜCKGEWINNUNG AUS EINEM VON EINEM BRENNER ERZEUGTEN RAUCHGAS**

(30) Priorität: 15.12.2016 DE 102016015012
(71) Anmelder: Linde Aktiengesellschaft, 80331 München (DE)
(72) Erfinder: Mieth, Rainer, 85435 Erding (DE); Maier, Alexander, 83607 Holzkirchen (DE); Ulmer, Sebastian, 81477 München (DE); Seys, Michael, 80796 München (DE); Calvo, Jose Rodriguez, 80995 München (DE); Jarosch, Maximilian, 81827 München (DE)
(74) Vertreter: Gellner, Bernd

(57) **Zusammenfassung**

Die vorliegende Erfindung betrifft ein Verfahren zur Wärmerückgewinnung aus einem von einem Brenner (101) erzeugten Rauchgas, wobei thermische Energie des Rauchgases durch eine rekuperative Wärmerückgewinnung auf Reformierungsedukte in einer Reformereinheit (130) übertragen wird, wobei das Rauchgas zumindest teilweise rezirkuliert und als Reformierungsedukt der Reformereinheit (130) zugeführt wird, wobei der Reformereinheit (130) zusammen mit dem rezirkuliertem Rauchgas als Reformierungsedukt ein Brennstoff zugeführt wird, wobei in der Reformereinheit (130) mit Hilfe der aus dem Rauchgas übertragenen thermischen Energie eine Reformierungsreaktion des Brennstoffs und des rezirkulierten Rauchgases zu einem Synthesegas durchgeführt wird und wobei das in der Reformereinheit erzeugte Synthesegas dem Brenner (101) zugeführt und von dem Brenner zu dem Rauchgas verbrannt wird.

## Beschreibung

Die Erfindung betrifft ein Verfahren sowie ein Wärmerückgewinnungssystem zur Wärmerückgewinnung aus einem von einem Brenner erzeugten Rauchgas.

### Stand der Technik

In Brennern kann ein Brennstoff, z.B. Erdgas oder Methan, zusammen mit einem Oxidationsmittel, z.B. Luft oder Sauerstoff, zu einem Rauchgas verbrannt werden. Derartige Brenner können zum Befeuern von Öfen verwendet werden, z.B. von Glasöfen, um Glas von seinem festen Aggregatszustand in seinen flüssigen zu überführen.

Das von einem derartigen Brenner erzeugte Rauchgas hat vergleichsweise hohe Temperaturen von üblicherweise bis zu 1500°C oder höher und kann genutzt werden, um den Brennstoff und/oder das Oxidationsmittel vorzuwärmen. Zu diesem Zweck kann ein sog. diskontinuierlich betriebener Regenerator verwendet werden, welcher zumeist zwei Regeneratorbetten aufweist und abwechselnd in einem ersten und einem zweiten Betriebsmodus betrieben werden kann. Während des ersten Betriebsmodus kann das heiße Rauchgas durch ein erstes Regeneratorbett geführt werden und dieses aufwärmen. Sobald dieses vom Rauchgas durchströmte erste Regeneratorbett auf eine ausreichende Temperatur aufgewärmt ist, wird zwischen den Betriebsmodi umgeschaltet und das Rauchgas kann in dem zweiten Betriebsmodus durch ein zweites Regeneratorbett geführt werden. Durch das aufgewärmte erste Regeneratorbett kann in diesem zweiten Betriebsmodus das Brenngas und/oder das Oxidationsmittel geführt und vorgewärmt und anschließend dem Brenner zugeführt werden. Analog können Brenngas und/oder Oxidationsmittel in dem ersten Betriebsmodus durch das aufgewärmte zweite Regeneratorbett geführt und darin vorgewärmt werden.

Eine derartige herkömmliche Wärmerückgewinnung aus von einem Brenner erzeugtem Rauchgas kann zumeist nur mit geringer Effizienz durchgeführt werden, so dass nur ein vergleichsweise geringer Anteil der thermischen Energie des Rauchgases auf den Brennstoff bzw. das Oxidationsmittel übertragen werden kann. Das Rauchgas kann nach Durchlauf durch das entsprechende Regeneratorbett noch vergleichsweise hohe Temperaturen von bis zu über 800°C besitzen. Demgemäß kann ein entsprechend großer Anteil der im Rauchgas enthaltenen Energie nicht durch die Brennstoff- bzw. Oxidationsmittelvorwärmung zurückgewonnen werden, was zu einer vergleichsweise geringen Effizienz des entsprechenden Brenners führt.

Es ist daher wünschenswert, eine verbesserte Wärmerückgewinnung aus von einem Brenner erzeugtem Rauchgas bereitzustellen.

### Offenbarung der Erfindung

Erfindungsgemäß werden ein Verfahren zur Wärmerückgewinnung aus einem von einem Brenner erzeugten Rauchgas sowie ein Wärmerückgewinnungssystem für einen Brenner mit den Merkmalen der unabhängigen Patentansprüche vorgeschlagen. Vorteilhafte Ausgestaltungen sind Gegenstand der jeweiligen Unteransprüche sowie der nachfolgenden Beschreibung.

Das erfindungsgemäße Wärmerückgewinnungssystem ist dazu eingerichtet, das erfindungsgemäße Verfahren durchzuführen. Vorteile und bevorzugte Ausgestaltungen des erfindungsgemäßen Verfahrens sowie des erfindungsgemäßen Wärmerückgewinnungssystems ergeben sich aus der nachfolgenden Beschreibung jeweils in analoger Weise.

Erfindungsgemäß wird thermische Energie des Rauchgases durch eine rekuperative Wärmerückgewinnung auf Reformierungsedukte unter anderem in einer Reformereinheit übertragen. Das Rauchgas wird zumindest teilweise als rezirkuliertes Rauchgas und als Reformierungsedukt der Reformereinheit zugeführt. Zusammen mit dem rezirkulierten Rauchgas wird der Reformereinheit ein Brennstoff als Reformierungsedukt zugeführt. In der Reformereinheit wird mit Hilfe der aus dem Rauchgas übertragenen thermischen Energie eine Reformierungsreaktion des Brennstoffs und des rezirkulierten Rauchgases zu einem Synthesegas durchgeführt. Das in der Reformereinheit erzeugte Synthesegas wird dem Brenner zugeführt und von dem Brenner zu dem Rauchgas verbrannt.

Insbesondere wird dabei zunächst die thermische Energie von dem abgeführten Rauchgas auf die Reformierungsedukte übertragen und anschließend wird das abgekühlte Rauchgas zumindest teilweise rezirkuliert und der Reformereinheit als Reformierungsedukt zugeführt. Es ist jedoch auch denkbar, dass thermische Energie von einem Teil des abgeführten Rauchgases auf die Reformierungsedukte übertragen wird und dass ein anderer Teil des abgeführten Rauchgases als Reformierungsedukt der Reformereinheit zugeführt wird.

Das erfindungsgemäße Wärmerückgewinnungssystem weist eine Rauchgasabführung auf, die dazu eingerichtet ist, das von einem Brenner erzeugte Rauchgas abzuführen. Beispielsweise kann diese Rauchgasabführung an einem Ofen, einer Brennkammer oder dergleichen angeordnet sein, welcher bzw. welche mit dem Brenner befeuert wird. Die Rauchgasabführung ist mit der Reformereinheit verbunden und dazu eingerichtet, in der Reformereinheit thermische Energie für die endotherme Reformierungsreaktion bereit zu stellen sowie abgeführtes Rauchgas zumindest teilweise als rezirkuliertes Rauchgas als Reformierungsedukt der Reformereinheit zuzuführen. Weiterhin ist insbesondere eine Brennstoffzufuhr vorgesehen, die dazu eingerichtet ist, Brennstoff als Reformierungsedukt der Reformereinheit zuzuführen.

Zum Übertragen der thermischen Energie von dem abgeführten Rauchgas in der Rauchgasabführung auf die Reformierungsedukte in der Reformereinheit durch die rekuperative Wärmerückgewinnung ist eine (erste) Wärmeübertragungseinheit vorgesehen. Diese (erste) Wärmeübertragungseinheit ist beispielsweise als Wärmetauscher, z.B. als Kühlschlange, ausgebildet und kann zweckmäßigerweise in die Rauchgasabführung integriert sein. Eine Synthesegasführung ist dazu eingerichtet, von der Reformereinheit erzeugtes Synthesegas dem Brenner zuzuführen.

Des Weiteren ist es ebenso denkbar, nur einen Teil des Brennstoffes in die Reformierungseinheit zu leiten und im Brenner eine Mischung aus Synthesegas und Brennstoff zu verbrennen.

Insbesondere ist eine Steuereinheit zum Steuern des Wärmerückgewinnungssystems vorgesehen, beispielsweise eine Speicherprogrammierbare Steuerung (SPS), eine Numerische Steuerung (NC) oder eine Computerisierte Numerische Steuerung (CNC), welche dazu eingerichtet ist eine bevorzugte Ausführungsform des erfindungsgemäßen Verfahrens durchzuführen.

Unter Synthesegas ist zweckmäßigerweise ein Gasgemisch aus Wasserstoff und Kohlenmonoxid zu verstehen. Es versteht sich, dass dieses Gasgemisch noch andere Stoffe aufweisen kann, Wasserstoff und Kohlenmonoxid stellen jedoch insbesondere den größten Stoffanteil dar. Das rezirkulierte Rauchgas enthält unter anderem insbesondere Kohlendioxid sowie Wasserdampf, welche als Edukte für die Reformierungsreaktion fungieren. Im Zuge der Reformierungsreaktion reagieren Methan, Kohlendioxid und Wasser zu Kohlenmonoxid und Wasserstoff. Bevorzugt wird daher Erdgas und/oder Methan als Brennstoff verwendet.

Die Reformierungsreaktion kann katalytisch oder auch nicht katalytisch durchgeführt werden und ist eine endotherme chemische Reaktion. Die für die Reaktion benötigte Reaktionswärme wird direkt dem Rauchgas entzogen. Durch die Erfindung kann somit aus dem Rauchgas zurückgewonnene Energie direkt verwendet werden und in dem Brennstoff gespeichert werden, indem die chemisch gebundene Energie des Brennstoffs durch die endotherme Reformierungsreaktion erhöht wird. Dies ist gleichbedeutend mit einer Erhöhung des Brennstoff-Heizwertes. Durch eine derartige Erhöhung des Brennstoff-Heizwertes kann wiederum die Menge an unterfeuertem Brennstoff reduziert werden, wodurch der Brennstoffverbrauch des Brenners verringert werden kann. In gleicher Weise kann die für die Verbrennung benötigte Sauerstoff- bzw. Oxidationsmittelmenge reduziert werden. Verbunden damit ergibt sich insbesondere eine reduzierte Rauchgasmenge. Umweltbelastungen und Emissionen, z.B. Kohlenstoffdioxid- und Stickoxidausstoß, können verringert werden. Betriebskosten und elektrischer Verbrauch zum Betreiben des Brenners können reduziert und die Effizienz des Brenners kann erhöht werden.

Mit Hilfe der endothermen Reformierungsreaktion kann dem Rauchgas deutlich mehr Wärme entzogen werden, als es bei herkömmlichen Wärmerückgewinnungsmethoden der Fall ist, insbesondere bei zyklisch betriebenen Regeneratoren. Ein derartiges herkömmliches Verfahren zur Wärmerückgewinnung mit Hilfe eines diskontinuierlich betriebenen Regenerators ist beispielsweise in der EP 0 953 543 B1 beschrieben. Dabei werden Schritte (A) und (B) in zyklischer Weise wiederholt. In Schritt (A) wird ein erstes Regenerationsbett von einem Abgas eines Ofens durchströmt und aufgewärmt.

In einem anschließenden Schritt (B) werden Reaktanten durch das aufgewärmte erste Regenerationsbett geleitet und in einer endothermen chemischen Reaktion zur Reaktion gebracht, wodurch Reaktionsprodukte erzeugt werden und das erste Regenerationsbett gekühlt wird. Analog wird in dem Schritt (B) ein zweites Regenerationsbett von dem Ofenabgas durchströmt und aufgewärmt. In dem Schritt (A) werden analog Reaktanten durch das aufgewärmte zweite Regenerationsbett geleitet und die endotherme chemische Reaktion durchgeführt. Insbesondere das Aufwärmen von Regeneratorbetten derartiger herkömmlicher Regeneratoren kann zumeist nur mit vergleichsweise geringer Effizienz durchgeführt werden und aus dem Abgas kann nur vergleichsweise wenig Wärme entzogen werden.

Im Gegensatz dazu ist es für die Erfindung nicht nötig, dass mittels des Rauchgases zunächst ein Regeneratorbett aufgewärmt werden muss, um Wärme zwischen zu speichern. Stattdessen kann die durch die rekuperative Wärmerückgewinnung genutzte thermische Energie des Rauchgases direkt ohne Zwischenspeicherung für die Erzeugung des Synthesegases weiterverwendet werden. Die Erfindung ermöglicht somit eine Wärmerückgewinnung aus von einem Brenner erzeugten Rauchgas und Erzeugung von Synthesegas mit Hilfe dieser rückgewonnenen Wärme mit hoher Effizienz. Weiterhin kann die Menge an eingesetztem Material reduziert werden, da nicht mehrere Regeneratorbetten und entsprechende zusätzliche Leitungen, Ventile, usw. benötigt werden.

Die Reformereinheit ist insbesondere als ein kontinuierlich betriebener Reformer ausgebildet, d.h. der Reformer wird kontinuierlich von Rauchgas und Brennstoff durchströmt und produziert kontinuierlich Synthesegas. Beispielsweise kann die Reformereinheit zu diesem Zweck kontinuierlich von dem Rauchgas umströmt werden, um kontinuierlich thermische Energie auf die Reformereinheit zu übertragen.

Vorteilhafterweise kann das Rauchgas, nachdem es abgekühlt wurde, um die Reformierungsreaktion anzutreiben, weiter abgekühlt werden und zur Vorwärmung von weiteren Stoffen, Gasen, Elementen usw. verwendet werden, wie nachfolgend beschrieben wird. Somit kann die Wärmerückgewinnung aus dem Rauchgas noch weiter erhöht werden.

Gemäß einer bevorzugten Ausgestaltung wird weitere thermische Energie des Rauchgases auf den Brennstoff übertragen, um diesen vorzuwärmen, bevor der Brennstoff der Reformereinheit zugeführt wird. Zu diesem Zweck ist vorzugsweise eine zweite Wärmeübertragungseinheit vorgesehen, die dazu eingerichtet ist, thermische Energie von abgeführtem Rauchgas in der Rauchgasabführung auf den Brennstoff zu übertragen. Durch diese Vorwärmung des Brennstoffs kann die Effizienz des Wärmerückgewinnungssystems weiter erhöht werden.

Vorzugsweise wird weitere thermische Energie des Rauchgases auf ein Oxidationsmittel übertragen, um dieses vorzuwärmen. Das vorgewärmte Oxidationsmittel wird dem Brenner zugeführt und von dem Brenner zusammen mit dem Synthesegas zu dem Rauchgas verbrannt. Zu diesem Zweck ist vorzugsweise eine Oxidationsmittelzufuhr vorgesehen, die dazu eingerichtet ist, das Oxidationsmittel dem Brenner zuzuführen. Eine dritte Wärmeübertragungseinheit ist vorteilhafterweise dazu eingerichtet, thermische Energie von abgeführtem Rauchgas in der Rauchgasabführung auf das Oxidationsmittel in der Oxidationsmittelzufuhr zu übertragen. Bevorzugt kann Luft und/oder Sauerstoff und/oder mit Sauerstoff angereicherte Luft als Oxidationsmittel verwendet werden. Durch diese Vorwärmung des Oxidationsmittels kann die Effizienz des Brenners weiter erhöht werden.

Vorteilhafterweise wird weitere thermische Energie des Rauchgases auf das rezirkulierte Rauchgas übertragen, um dieses vorzuwärmen, bevor das rezirkulierte Rauchgas der Reformereinheit zugeführt wird. Zu diesem Zweck ist vorzugsweise eine vierte Wärmeübertragungseinheit vorgesehen. Die vierte Wärmeübertragungseinheit ist zweckmäßigerweise stromabwärts der zweiten Wärmeübertragungseinheit in die Rauchgasabführung integriert. Zweckmäßigerweise wird somit wärmeres Rauchgas stromaufwärts in der Rauchgasabführung verwendet, um kälteres Rauchgas weiter stromabwärts in der Rauchgasabführung aufzuwärmen. Durch diese Vorwärmung des rezirkulierten Rauchgases kann die Effizienz des Wärmerückgewinnungssystems weiter erhöht werden.

Gemäß einer vorteilhaften Ausführungsform wird weitere thermische Energie des Rauchgases auf eine Dampfeinheit übertragen. Mit Hilfe der aus dem Rauchgas übertragenen thermischen Energie wird in der Dampfeinheit Wasserdampf erzeugt. Zu diesem Zweck ist vorzugsweise eine fünfte Wärmeübertragungseinheit vorgesehen.

Die Dampfeinheit ist vorteilhaft mit der Reformereinheit verbunden. Vorzugsweise wird der erzeugte Wasserdampf zusammen mit dem Brennstoff und dem rezirkulierten Rauchgas der Reformereinheit zugeführt und in der Reformereinheit wird mit Hilfe der aus dem Rauchgas übertragenen thermischen Energie die Reformierungsreaktion des Brennstoffs, des rezirkulierten Rauchgases und des Wasserdampfs zu dem Synthesegas durchgeführt. Eine derartige Ausgestaltung bietet sich insbesondere an, falls das Rauchgas nicht ausreichend Wasserdampf aufweist für die effektive Durchführung der Reformierungsreaktion.

Die erste bis fünfte Wärmeübertragungseinheit kann jeweils als regenerative oder rekuperative Wärmeübertragungseinheit ausgebildet sein. Beispielsweise können die Wärmeübertragungseinheiten jeweils als Wärmetauscher ausgebildet sein, etwa als Kühlschlange oder als Plattenwärmetauscher. Es versteht sich, dass das Wärmerückgewinnungssystem nicht notwendigerweise all diese fünf Wärmeübertragungseinheiten aufweisen muss, sondern auch nur einzelne dieser Wärmeübertragungseinheit aufweisen kann. Weiterhin sind die Bezeichnungen "erste" Wärmeübertragungseinheit, "zweite" Wärmeübertragungseinheit, "dritte" Wärmeübertragungseinheit usw. nicht derart zu verstehen, dass dadurch eine bestimmte Reihenfolge oder Relevanz angegeben werden soll. Diese einzelnen Wärmeübertragungseinheiten können in geeigneter Reihenfolge in die Rauchgasabführung integriert sein. Zweckmäßigerweise sind die zweite bis fünfte Wärmeübertragungseinheit jeweils stromabwärts der ersten Wärmeübertragungseinheit angeordnet. Die Wärmeübertragung in den einzelnen Wärmeübertragungseinheiten kann einstufig oder auch mehrstufig erfolgen.

Der Brenner kann vorteilhafterweise zum Beheizen eines Ofens verwendet werden, vorzugsweise eines Glasofens zum Schmelzen von Glas. Der Ofen kann somit effizient betrieben werden. Betriebskosten, elektrischer Verbrauch, Umweltbelastungen und Emissionen beim Betrieb des Ofens können reduziert werden.

Weitere Vorteile und Ausgestaltungen der Erfindung ergeben sich aus der Beschreibung und der beiliegenden Zeichnung.

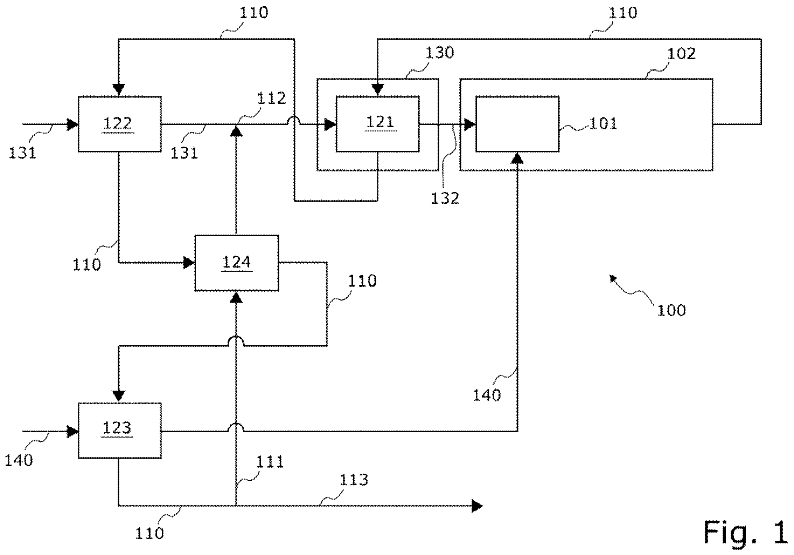

Die Erfindung ist anhand von Ausführungsbeispielen in der Zeichnung schematisch dargestellt und wird im Folgenden unter Bezugnahme auf die Zeichnung beschrieben. Kurze Beschreibung der Zeichnungen
- Figuren 1 bis 2: zeigen jeweils schematisch eine bevorzugte Ausgestaltung eines erfindungsgemäßen Wärmerückgewinnungssystems, das jeweils dazu eingerichtet ist, eine bevorzugte Ausführungsform eines erfindungsgemäßen Verfahrens durchzuführen.

### Ausführungsform(en) der Erfindung

In Figur 1 ist eine bevorzugte Ausgestaltung eines erfindungsgemäßen Wärmerückgewinnungssystems schematisch dargestellt und mit 100 bezeichnet, das dazu eingerichtet ist, eine bevorzugte Ausführungsform eines erfindungsgemäßen Verfahrens durchzuführen.

In einem Ofen 102, z.B. einem Glasofen, ist ein Brenner 101 angeordnet, um diesen Ofen 102 zu befeuern. In dem Brenner 101 wird ein Synthesegas, z.B. ein Gemisch aus Wasserstoff und Kohlenmonoxid, zusammen mit einem Oxidationsmittel, z.B. Luft, zu einem Rauchgas, insbesondere einer Mischung aus Kohlendioxid und Wasserdampf, verbrannt.

Eine Rauchgasabführung 110 ist vorgesehen, um das von dem Brenner 101 erzeugte Rauchgas aus dem Ofen 102 abzuführen.

In diese Rauchgasabführung 110 ist eine Vielzahl von kontinuierlich betriebenen Wärmeübertragungseinheiten 121, 122, 123, 124 integriert, welche jeweils z.B. als Wärmetauscher ausgebildet sind.

Eine erste, rekuperative Wärmeübertragungseinheit 121 ist dazu eingerichtet, thermische Energie von dem abgeführten Rauchgas in der Rauchgasabführung 110 durch eine rekuperative Wärmerückgewinnung auf Reformierungsedukte einer Reformereinheit 130 zu übertragen.

Über eine Brennstoffzufuhr 131 wird der Reformereinheit 130 ein Brennstoff als Reformierungsedukt zugeführt, insbesondere Erdgas. Eine zweite Wärmeübertragungseinheit 122 ist stromabwärts zu der ersten Wärmeübertragungseinheit 121 in die Rauchgasabführung 110 integriert. Mittels dieser zweiten Wärmeübertragungseinheit 122 wird weitere thermische Energie von dem abgeführten Rauchgas in der Rauchgasabführung 110 auf den Brennstoff in der Brennstoffzufuhr 131 übertragen. Somit kann der Brennstoff vorgewärmt werden, bevor er der Reformereinheit 130 zugeführt wird.

Über eine Oxidationsmittelzufuhr 140 wird dem Brenner 101 das Oxidationsmittel zugeführt. Über eine dritte Wärmeübertragungseinheit 123 wird weitere thermische Energie von dem abgeführten Rauchgas in der Rauchgasabführung 110 auf das Oxidationsmittel in der Oxidationsmittelzufuhr 140 übertragen. Das Oxidationsmittel wird somit vorgewärmt, bevor es dem Brenner 101 zugeführt wird.

Stromabwärts der dritten Wärmeübertragungseinheit 123 wird die Rauchgasabführung 110 geteilt. Über eine Rezirkulierleitung 111 wird zumindest ein Teil des Rauchgases als rezirkuliertes Rauchgas rückgeführt und an einem Knotenpunkt 112 in die Brennstoffzufuhr 131 geleitet. Somit wird dieses rezirkulierte Rauchgas als Reformierungsedukt zusammen mit dem Brennstoff in der Brennstoffzufuhr 131 der Reformereinheit 130 zugeführt. Nicht benötigtes Rauchgas wird über eine Abführleitung 113 aus dem Wärmerückgewinnungssystem 100 abgeführt und z.B. an die Atmosphäre abgegeben.

Stromaufwärts der dritten Wärmeübertragungseinheit 123 ist eine vierte Wärmeübertragungseinheit 124 in die Rauchgasabführung 110 integriert. Mittels dieser vierten Wärmeübertragungseinheit 124 wird weitere thermische Energie von dem Rauchgas in der Rauchgasabführung 110 auf das rezirkulierte Rauchgas in der Rezirkulierleitung 111 übertragen. Somit wird das rezirkulierte Rauchgas vorgewärmt, bevor es als Reformierungsedukt der Reformereinheit 130 zugeführt wird.

Mit Hilfe der thermischen Energie, die mittels der ersten Wärmeübertragungseinheit 121 aus dem abgeführten Rauchgas auf die Reformierungsedukte in der Reformereinheit 130 übertragenen wird, wird in der Reformereinheit 130 eine Reformierungsreaktion durchgeführt. Im Zuge dieser Reformierungsreaktion wird der vorgewärmte Brennstoff zusammen mit dem vorgewärmten, rezirkulierten Rauchgas zur Reaktion gebracht und das Synthesegas wird erzeugt.

Über eine Synthesegasführung 132 wird dieses von der Reformereinheit 130 erzeugte Synthesegas dem Brenner 101 zugeführt. Des Weiteren ist es möglich, nur einen Teil des Brennstoffs in die Reformierungseinheit 130 zu leiten und somit dem Brenner eine Mischung aus Synthesegas und Brennstoff zuzuführen.

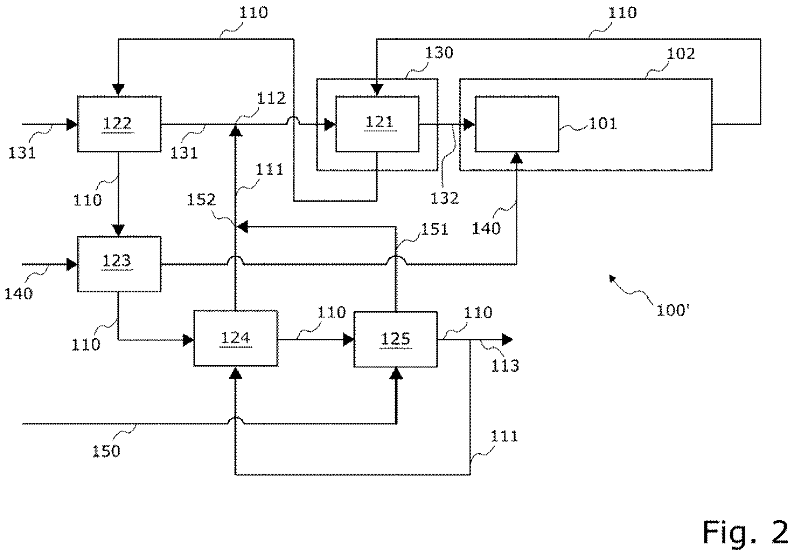

In Figur 2 ist eine weitere bevorzugte Ausgestaltung eines erfindungsgemäßen Wärmerückgewinnungssystems schematisch dargestellt und mit 100' bezeichnet. Identische Bezugszeichen in den Figuren bezeichnen gleiche oder baugleiche Elemente.

Im Beispiel von Figur 2 ist die dritte Wärmeübertragungseinheit 123 stromaufwärts der vierten Wärmeübertragungseinheit 124 in der Rauchgasabführung 110 angeordnet. Weiterhin weist das Wärmerückgewinnungssystem 100' gemäß Figur 2 eine fünfte Wärmeübertragungseinheit 125 auf, welche stromabwärts der vierten Wärmeübertragungseinheit 124 in die Rauchgasabführung 110 integriert ist.

Mittels der fünften Wärmeübertragungseinheit 125 wird thermische Energie von dem abgeführten Rauchgas in der Rauchgasabführung 110 auf Wasser in einer Wasserzufuhr 150 übertragen. Das Wasser in der Wasserzufuhr 150 wird durch diese Wärmeübertragung so weit erhitzt, dass Wasserdampf erzeugt wird. Über eine Dampfzufuhr 151 wird dieser Wasserdampf an einem Knotenpunkt 152 in die Rezirkulierleitung 111 geleitet. Der Wasserdampf wird somit zusammen mit dem rezirkulierten Rauchgas an dem Knotenpunkt 112 in die Brennstoffzufuhr 131 geleitet.

Somit wird der Wasserdampf zusammen mit dem Brennstoff und dem rezirkulierten Rauchgas als Reformierungsedukt in die Reformereinheit 130 geleitet und dort im Zug der Reformierungsreaktion zur Reaktion gebracht, wodurch das Synthesegas erzeugt wird.

### Bezugszeichenliste

- 100: Wärmerückgewinnungssystem
- 100': Wärmerückgewinnungssystem

- 101: Brenner
- 102: Ofen, Glasofen

- 110: Rauchgasabführung
- 111: Rezirkulierleitung
- 112: Knotenpunkt
- 113: Abführleitung
- 121: Wärmeübertragungseinheit, Wärmetauscher
- 122: Wärmeübertragungseinheit, Wärmetauscher
- 123: Wärmeübertragungseinheit, Wärmetauscher
- 124: Wärmeübertragungseinheit, Wärmetauscher
- 125: Wärmeübertragungseinheit, Wärmetauscher

- 130: Reformereinheit
- 131: Brennstoffzufuhr
- 132: Synthesegaszufuhr

- 140: Oxidationsmittelzufuhr

- 150: Wasserzufuhr
- 151: Dampfzufuhr
- 152: Knotenpunkt

## Patentansprüche

1. Verfahren zur Wärmerückgewinnung aus einem von einem Brenner (101) erzeugten Rauchgas, wobei thermische Energie des Rauchgases durch eine rekuperative Wärmerückgewinnung auf Reformierungsedukte in einer Reformereinheit (130) übertragen wird, wobei das Rauchgas zumindest teilweise rezirkuliert und als Reformierungsedukt der Reformereinheit (130) zugeführt wird, wobei der Reformereinheit (130) zusammen mit dem rezirkulierten Rauchgas als Reformierungsedukt ein Brennstoff zugeführt wird, wobei in der Reformereinheit (130) mit Hilfe der aus dem Rauchgas übertragenen thermischen Energie eine Reformierungsreaktion des Brennstoffs und des rezirkulierten Rauchgases zu einem Synthesegas durchgeführt wird und wobei das in der Reformereinheit erzeugte Synthesegas dem Brenner (101) zugeführt und von dem Brenner zu dem Rauchgas verbrannt wird.

2. Verfahren nach Anspruch 1, wobei weitere thermische Energie des Rauchgases auf den Brennstoff (130) übertragen wird, um diesen vorzuwärmen, bevor der Brennstoff der Reformereinheit (130) zugeführt wird.

3. Verfahren nach Anspruch 1 oder 2, wobei weitere thermische Energie des Rauchgases auf ein Oxidationsmittel übertragen wird, um dieses vorzuwärmen, wobei das vorgewärmte Oxidationsmittel dem Brenner (101) zugeführt und von dem Brenner (101) zusammen mit dem Synthesegas zu dem Rauchgas verbrannt wird.

4. Verfahren nach einem der vorstehenden Ansprüche, wobei weitere thermische Energie des Rauchgases auf das rezirkulierte Rauchgas übertragen wird, um dieses vorzuwärmen, bevor das rezirkulierte Rauchgas der Reformereinheit (130) zugeführt wird.

5. Verfahren nach einem der vorstehenden Ansprüche, wobei weitere thermische Energie des Rauchgases auf eine Dampfeinheit (150) übertragen wird und wobei in der Dampfeinheit (150) mit Hilfe der aus dem Rauchgas übertragenen thermischen Energie Wasserdampf erzeugt wird.

6. Verfahren nach Anspruch 5, wobei der erzeugte Wasserdampf zusammen mit dem Brennstoff und dem rezirkulierten Rauchgas der Reformereinheit (130) zugeführt wird und wobei in der Reformereinheit mit Hilfe der aus dem Rauchgas übertragenen thermischen Energie die Reformierungsreaktion des Brennstoffs, des rezirkulierten Rauchgases und/oder des Wasserdampfs zu dem Synthesegas durchgeführt wird.

7. Verfahren nach einem der vorstehenden Ansprüche, wobei Erdgas und/oder Methan als Brennstoff verwendet werden.

8. Verfahren nach einem der vorstehenden Ansprüche soweit rückbezogen auf Anspruch 3, wobei Luft und/oder Sauerstoff und/oder mit Sauerstoff angereicherte Luft als Oxidationsmittel verwendet werden.

9. Verfahren nach einem der vorstehenden Ansprüche, wobei der Brenner (101) verwendet wird, um einen Ofen (102) zu beheizen, insbesondere einen Glasofen.

10. Wärmerückgewinnungssystem (100, 100') für einen Brenner (101) mit einer Rauchgasabführung (110), die dazu eingerichtet ist, ein von dem Brenner (101) erzeugtes Rauchgas abzuführen, einer Reformereinheit (130), wobei die Rauchgasabführung (110) mit der Reformereinheit (130) verbunden und dazu eingerichtet ist, abgeführtes Rauchgas zumindest teilweise zu rezirkulieren und als Reformierungsedukt der Reformereinheit (130) zuzuführen, einer rekuperativen Wärmeübertragungseinheit (121), die dazu eingerichtet ist, thermische Energie von abgeführtem Rauchgas in der Rauchgasabführung (110) durch eine rekuperative Wärmerückgewinnung auf Reformierungsedukte in der Reformereinheit (130) zu übertragen, wobei die Reformereinheit (110) dazu eingerichtet ist, mit Hilfe der aus dem abgeführtem Rauchgas übertragenen thermischen Energie eine Reformierungsreaktion eines Brennstoffs und des rezirkulierten Rauchgases als Reformierungsedukte zu einem Synthesegas durchzuführen, und mit einer Synthesegasführung (132), die dazu eingerichtet ist, von der Reformereinheit (130) erzeugtes Synthesegas dem Brenner (131) zuzuführen, wobei das Wärmerückgewinnungssystem (100, 100') dazu eingerichtet ist, ein Verfahren nach einem der vorstehenden Ansprüche durchzuführen.

11. Wärmerückgewinnungssystem (100, 100') nach Anspruch 10 mit einer zweiten Wärmeübertragungseinheit (122), die dazu eingerichtet ist, thermische Energie von abgeführtem Rauchgas in der Rauchgasabführung (110) auf den Brennstoff zu übertragen.

12. Wärmerückgewinnungssystem (100, 100') nach Anspruch 10 oder 11 mit einer Oxidationsmittelzufuhr (140), die dazu eingerichtet ist, ein Oxidationsmittel dem Brenner (101) zuzuführen, und mit einer dritten Wärmeübertragungseinheit (123), die dazu eingerichtet ist, thermische Energie von abgeführtem Rauchgas in der Rauchgasabführung (110) auf Oxidationsmittel in der Oxidationsmittelzufuhr (140) zu übertragen.

13. Wärmerückgewinnungssystem (100, 100') nach einem der Ansprüche 10 bis 12 mit einer vierten Wärmeübertragungseinheit (124), die dazu eingerichtet ist, thermische Energie von abgeführtem Rauchgas in der Rauchgasabführung (110) auf das rezirkulierte Rauchgas weiter stromabwärts in der Rauchgasabführung (110) zu übertragen.

14. Wärmerückgewinnungssystem (100, 100') nach einem der Ansprüche 10 bis 13 mit einer Dampfeinheit (150), die mit der Reformereinheit (130) verbunden ist, und mit einer fünften Wärmeübertragungseinheit (125), die dazu eingerichtet ist, thermische Energie von abgeführtem Rauchgas in der Rauchgasabführung (110) auf die Dampfeinheit (150) zu übertragen.
